# EUROPÄISCHE PATENTSCHRIFT

(11) **EP 3 228 491 B1**
(45) Veröffentlichungstag und Bekanntmachung des Hinweises auf die Patenterteilung: **21.11.2018**
(21) Anmeldenummer: 17164467.7
(22) Anmeldetag: 03.04.2017
(51) Int. Cl.: B60L 3/00, B60L 11/08, B60L 11/18, H02K 11/33, H02K 5/22, H02K 5/18

(54) **ELEKTRISCHE MOTOREINHEIT FÜR MOBILE ARBEITSMASCHINE**
ELECTRIC MOTOR UNIT FOR MOBILE WORKING MACHINE
MOTEUR ÉLECTRIQUE POUR MACHINE MOBILE

(30) Priorität: 04.04.2016 DE 102016106104
(43) Veröffentlichungstag der Anmeldung: 11.10.2017
(73) Patentinhaber: Linde Material Handling GmbH, 63743 Aschaffenburg (DE)
(72) Erfinder: SIPPEL, Heiko, 63741 Aschaffenburg (DE); STEIN, Gerald, 63768 Aschaffenburg (DE)
(74) Vertreter: Patentship Patentanwaltsgesellschaft mbH

(56) Entgegenhaltungen:
- EP-A1- 0 958 646
- EP-A2- 1 921 733
- US-A- 5 873 285
- US-A1- 2007 296 290

## Beschreibung

Die Erfindung betrifft eine elektrische Motoreinheit für eine mobile Arbeitsmaschine. Insbesondere betrifft die Erfindung eine elektrische Antriebsachse für eine mobile Arbeitsmaschine mit mindestens einem elektrischen Antriebsmotor, einer zur Ansteuerung des Antriebsmotors bestimmten Leistungselektronik, die in einem Leistungselektronikgehäuse angeordnet ist, wobei das Leistungselektronikgehäuse mit einem Motorgehäuse über eine Trennfuge verbunden ist und Druckkontakte von Leistungsanschlüssen der Leistungselektronik und des Antriebsmotors im Verbindungsbereich von Leistungselektronikgehäuse und Motorgehäuse im Inneren der Gehäuse angeordnet sind und zu einer elektrischen Verbindung zusammenwirken, von denen jeweils ein Druckkontakt als Leistungselektronikkontakt der Leistungselektronik und ein mit diesem zusammenwirkender Druckkontakt als Anschlusskontakt dem Antriebsmotors zugeordnet ist.

Bei mobilen Arbeitsmaschinen insbesondere Flurförderzeugen, wie beispielsweise Gegengewichtsgabelstaplern, Schubmaststaplern und Lagertechnikgeräten, sind elektrische Fahrantriebe bekannt, bei denen Elektromotoren in einem Achsengehäuse angeordnet werden. Bekannt sind solche Fahrantriebe sowohl bei diesel-elektrisch angetriebenen mobilen Arbeitsmaschinen, bei denen über einen Verbrennungsmotor und einen Generator der elektrische Fahrantrieb mit Energie versorgt wird, als auch in sehr weitem Umfang bei batterie-elektrisch angetriebenen, mobilen Arbeitsmaschinen und Flurförderzeugen.

Die Elektromotoren sind dabei im Regelfall Drehstrommotoren, die über eine Leistungselektronik, insbesondere einen Umrichter angesteuert werden. Dabei ist es bekannt, den Umrichter separat von dem Elektromotor bzw. der Achse in dem Fahrzeug anzuordnen, beispielsweise bei einem Gegengewichtsgabelstapler auf dem Gegengewicht, um die Abwärme über das Gegengewicht abzuleiten.

Kurze Leitungsanschlüsse und ein möglichst kompakter Aufbau der Anordnung aus Umrichter und Achse sind jedoch wünschenswert, um durch geringe elektromagnetische Ausstrahlung hohe Schaltgeschwindigkeiten der Leistungselektronik und somit einen hohen Wirkungsgrad zu ermöglichen. Es ist daher bekannt, den Umrichter direkt an der Achse zu montieren. Eine bekannte Ausführungsform ist es dabei, Leistungsanschlüsse zwischen dem Umrichter und dem in der Achse angeordneten Elektromotor in offener Bauweise über Kabel und Stromschienen umzusetzen. Als Anschluss werden dabei Schraubverbindungen eingesetzt mit im Regelfall Kabelschuhen.

Nachteilig hieran ist, dass kein Schutz vor Wasser oder Schmutz besteht. Durch die offene Leitungsführung ergibt sich dabei immer noch eine relativ große elektromagnetische Ausstrahlung mit Nachteilen für die Schaltgeschwindigkeit und den Wirkungsgrad der Leistungselektronik bzw. des Umrichters. Auch ergibt sich ein relativ großes Bauvolumen durch die mechanische Trennung und aufgelöste bzw. offene Leistungsverdrahtung sowie eine nur geringe Robustheit des Systems. Ein weiterer Nachteil ist, dass aufgrund dieser aufgelösten Bauweise und der Verschraubungen an den Anschlüssen der Montageaufwand wie auch die Verwechslungsgefahr im Hinblick auf eine falsche Montage sehr hoch sind und geeignete Überwachungsverfahren eingesetzt werden müssen, um solche Fehler in der Produktion zu vermeiden.

Die Leistungselektronik und die Achse werden dabei häufig durch Luftleitbleche thermisch entkoppelt, so dass es keine direkte thermische Kopplung zwischen den Elektromotoren der Achse und der Leistungselektronik bzw. dem Umrichter gibt.

Elektrische Leistungsanschlüsse über Schraubverbindungen, beispielsweise mit Kabelschuhen die mit einer Mutter an einem Bolzen verschraubt werden, weisen den Nachteil auf, dass eine Verschraubung mit einem definierten Drehmoment sichergestellt sein muss. Durch Erwärmung und damit einhergehender Ausdehnung im Wechselspiel mit Abkühlphasen kann sich die Verschraubung lösen und es zu hohen Übergangswiderständen kommen, die aus Sicherheitsgründen vermieden werden müssen.

Es ist daher bekannt, solche Leistungsanschlüsse als Druckkontakte auszuführen, bei denen ein Druckstift auf einen beispielsweise durch eine Federkraft belasteten Gegenkontakt gedrückt wird und durch das Zusammendrücken der Feder eine gleichmäßige, definierte Anpresskraft der Kontaktflächen sichergestellt wird.

Es ist weiterhin bekannt, bei mobilen Arbeitsmaschinen, insbesondere Flurförderzeugen, Motoreinheiten einzusetzen, die aus einem Umrichter kombiniert mit einem Elektromotor bestehen. Solche Motoreinheiten werden beispielsweise verwendet, um einen Hydraulikpumpenantrieb zu bilden, wenn sie mit einer Hydraulikpumpe für eine Arbeitshydraulik verbunden werden. Ebenso werden solche Motoreinheiten als elektrischer Lenkantrieb bei einer Steer-by-Wire-Lenkung eines Flurförderzeugs eingesetzt.

Aus der EP 1 921 733 A2 ist eine elektrische Motoreinheit bekannt mit mindestens einem elektrischen Antriebsmotor und einer zur Ansteuerung des Drehstrommotors bestimmten Leistungselektronik, die in einem Leistungselektronikgehäuse angeordnet ist.

Aus der US 2007/296290 A1 ist ein Motormodul bekannt, das in einem Gehäuse gelagert und zu einer Terminal-Box montiert ist, die mit dem Gehäuse einstückig aufgebaut ist.

Aus der EP 0 958 646 A1 ist ein Elektromotor bekannt mit einem Frequenzumrichter, der in einem Gehäuse untergebracht ist. Ein Anschlusselemente aufnehmendes Zwischenteil ist zum thermischen Entkoppeln von Gehäuse und Elektromotor vorgesehen.

Aus der US 5 873 285 A ist eine Reaktionsrad-Einheit bekannt, wobei die Elektronik auf einen Sockel gestellt und auf dem Sockel eine Abdeckung angebracht ist, die den Rotor und den Motor des Reaktionsrades enthält.

Aus der DE 198 31 829 A1 ist eine Verbindung zwischen einer elektrischen Maschine und einer Leistungselektronikeinheit, insbesondere auch eines Antriebsmotors eines Fahrzeugs und eines Umrichters bekannt, bei der das Gehäuse der Leistungselektronikeinheit mit dem Gehäuse der Achse über eine Trennfuge verbunden ist und im Bereich der Trennfuge elektrische Druckkontakte angeordnet sind zur Verbindung der Leistungsanschlüsse. Dabei weist jeder Druckkontakt eine an der Leistungselektronikeinheit angeordnete und eine an der Achse angeordnete Kontaktfläche auf, wobei mindestens eine Kontaktfläche in Richtung der anderen Kontaktfläche federbelastet ist. Aus der DE 198 31 29 A1 ist ebenfalls bekannt, für die Anschlüsse der Leistungselektronikeinheit Schraubverbindungen unter einer zusätzlichen Abdeckung vorzusehen.

Aus der WO 2009/090111 A2 ist ein elektrischer Motor mit einer Leistungselektronik bekannt, wobei innerhalb des Gehäuses der Leistungselektronik eine Kontaktiervorrichtung angeordnet ist, die mit einer Gegenkontaktiervorrichtung des elektrischen Motors zusammen wirkt In einer Ausführungsform wird offenbart, dass die Gehäuse des Motors wie auch der Leistungselektronik zueinander eine Öffnung aufweisen, durch die die Gegenkontaktiervorrichtung zum Kontaktieren hindurchgeführt werden kann.

Nachteilig an diesem Stand der Technik ist, dass auch bei federbelasteten Kontakten durch Unebenheiten, Oxidation oder Verschmutzungen der Kontaktflächen es zu einer schlechten Verbindung kommen kann.

Der vorliegenden Erfindung liegt daher die Aufgabe zugrunde, eine elektrische Motoreinheit für eine mobile Arbeitsmaschine zur Verfügung zu stellen, die die zuvor genannten Nachteile vermeidet und mit der ein montagefreundlicher, kompakter und sicherer elektrischer Anschluss einer Leistungselektronik an die Fahrmotoren erreicht werden kann.

Diese Aufgabe wird durch eine elektrische Antriebsachse mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einer elektrischen Motoreinheit für eine mobile Arbeitsmaschine mit mindestens einem elektrischen Antriebsmotor, einer zur Ansteuerung des Antriebsmotors bestimmten Leistungselektronik, die in einem Leistungselektronikgehäuse angeordnet ist, wobei das Leistungselektronikgehäuse mit einem Motorgehäuse über eine Trennfuge verbunden ist und Druckkontakte von Leistungsanschlüssen der Leistungselektronik und des Antriebsmotors im Verbindungsbereich von Leistungselektronikgehäuse und Motorgehäuse im Inneren der Gehäuse angeordnet sind und zu einer elektrischen Verbindung zusammenwirken, von denen jeweils ein Druckkontakt als Leistungselektronikkontakt der Leistungselektronik und ein mit diesem zusammenwirkender Druckkontakt als Anschlusskontakt dem Antriebsmotors zugeordnet ist, mindestens einer der Druckkontakte in Richtung auf seinen mit diesem zusammenwirkenden Druckkontakt mit einer Federkraft beaufschlagt und über eine Mindeststrecke beweglich angeordnet ist sowie ein Druckkontakt ein durch eine scharf zulaufende Kante oder Schneide erzeugter Linienkontakt oder ein durch eine oder mehrere Zuspitzungen des Druckkontakts erreichter Punktkontakt ist und der mit diesem zusammenwirkende Druckkontakt ein Flächenkontakt ist.

Wenn bei der Montage das Leistungselektronikgehäuse an das Motorgehäuse montiert wird, so erfolgt automatisch die Verbindung der im Inneren der beiden Gehäuse im Verbindungsbereich angeordneten und aufeinander ausgerichteten Druckkontakte. Diese können dabei so angeordnet und die Verbindung der Gehäuse an der Trennfuge so ausgestaltet sein, dass keine falsche Montage möglich ist und bei einer richtigen Montage stets die richtigen Verbindungen automatisch hergestellt werden. Beispielsweise kann dies durch die Gestaltung eines Flansches als Trennfuge und/oder die Anordnung von Schraubverbindungen erfolgen. Durch die Federbelastung und den Linienkontakt oder Punktkontakt entsteht eine sichere elektrische Verbindung, unabhängig von Unebenheiten, Verschmutzungen oder Oxidation. Der Flächendruck auf der Linie des Linienkontaktes ist dabei über einen weiten Bereich der Kompression einer Feder gleichmäßig hoch. Durch den Federweg der Federbelastung können auch Ungenauigkeiten und Toleranzen ausgeglichen werden. Weiterhin ergibt sich nicht das Problem, dass im Dauerbetrieb durch wechselnde thermische Belastungen sich die elektrische Verbindung lösen kann und es zu einem hohen Übergangswiderstand kommen könnte. Ein Linienkontakt wird erfindungsgemäß durch eine scharf zulaufende Kante bzw.

Schneide erzeugt. Der Punktkontakt kann sich auf mehrere Punkte oder einen einzelnen beziehen und wird durch eine oder mehrere Zuspitzungen des Druckkontakts erreicht. Die gesamten elektrischen Anschlüsse befinden sich im Inneren des durch das Leistungselektronikgehäuse und Motorgehäuse insgesamt gebildeten Gehäuses. Dadurch ergeben sich eine große Robustheit, ein geringes Bauvolumen und eine geschützte Anordnung der elektrischen Verbindung zwischen Leistungselektronik und elektrischen Antriebsmotor in Bezug auf Feuchtigkeit und Schmutz. Da eine externe Leistungsverdrahtung mit Kabeln, Stromschienen etc. entfällt, ergeben sich weniger Komponenten und durch die geschützte Bauweise kann zusätzlich die Schutzklasse des Antriebs erhöht werden, ohne dass zusätzliche Maßnahmen erforderlich sind. Es entstehen Kostenvorteile und wird eine einfachere, schnellere Montage möglich. Weiterhin wird auch die Effizienz und Leistungsfähigkeit erhöht aufgrund des geringeren Bauvolumens und daraus resultierender geringerer elektromagnetische Abstrahlung. Es wird ein höherfrequentes Schalten der Leistungselektronik möglich, beispielsweise als Umrichter. Die Beaufschlagung mit einer Federkraft wird dabei durch eine beliebige Form von Federn und elastisch verformbare Materialien bewirkt.

Der Flächenkontakt kann mit einer Federkraft beaufschlagt sein.

Vorteilhaft besteht der Flächenkontakt aus einem Kabelschuh, der von einem Führungsdorn geführt wird, wobei um den Führungsdorn eine Spiralfeder angeordnet ist, die auf den Kabelschuh drückt.

Der Linienkontakt kann aus einer Hülse bestehen, deren Vorderkante eine Schneide bildet.

Das flächige Auge eines Kabelschuhs wird beispielsweise geführt von dem Führungsdorn von unten mit einer um den Führungsdorn gelegten Spiralfeder mit Federkraft beaufschlagt, während von oben ein Druckkontakt auf diesen als Linienkontakt drückt, beispielsweise eine zylinderförmige Hülse mit einer Schneide an einem Vorderende.

Der Punktkontakt kann aus einer Hülse bestehen, deren Vorderkante eine einen oder mehrere punktuelle Vorsprünge bildende Struktur aufweist.

Die Hülse kann koaxial mit dem Führungsdorn ausgerichtet sein.

Vorteilhaft steht das Leistungselektronikgehäuse zumindest mit einem Teilbereich einer als Kühlkörper ausgeformten Oberfläche einer Fläche des Motorgehäuses gegenüber.

Wenn das Leistungselektronikgehäuse über den Verbindungsbereich bzw. den Bereich der Trennfuge seitlich übersteht und eine Fläche dem Motorgehäuse zuwendet, wobei diese Fläche Rippen eines Kühlkörpers aufweist, so wird hierdurch zwischen Motorgehäuse und Leistungselektronikgehäuse ein Kanal gebildet, durch den effizient Kühlluft geleitet werden kann.

Dadurch kann ein gemeinsames und effizientes Kühlkonzept für die Leistungselektronik und die Achse entwickelt werden ohne etwa ein aufwendigeres System wie einen Flüssigkeitskreislauf zu benötigen.

In einer günstigen Weiterbildung weist die gegenüberstehende Fläche des Motorgehäuses Kühlrippen auf.

Der Leistungselektronikkontakt kann der Linienkontakt oder Punktkontakt sein.

Der Anschlusskontakt kann durch die Federkraft beaufschlagt werden.

Vorteilhaft ist die mobile Arbeitsmaschine ein Flurförderzeug.

Gerade beim Fahrantrieb von Flurförderzeugen, insbesondere Gegengewichtsgabelstaplern und Schubmaststaplern, werden große Leistungen benötigt, da die relativ schweren Fahrzeuge sehr häufig beschleunigt und elektrisch abgebremst werden, beispielsweise beim Reversieren bzw. Be- und Entladen von Lastwagen und Regalen.

Die Motoreinheit kann eine Antriebsachse der Arbeitsmaschine, oder ein Hydraulikpumpenantrieb, oder ein elektrischer Lenkantrieb sein.

Es ist denkbar die zuvor beschriebenen Merkmale einer Motoreinheit ganz allgemein bei einer Kombination von Elektromotor und Leistungselektronik einzusetzen.

Weitere Vorteile und Einzelheiten der Erfindung werden anhand der in den schematischen Figuren dargestellten Ausführungsbeispiele näher erläutert. Hierbei zeigt
- Fig. 1: einen Detailausschnitt einer Antriebsachse im Schnitt mit der erfindungsgemäßen Lösung,
- Fig. 2: schematisch eine elektrische Verbindung mit Gehäuseteilen von Leistungselektronik und Achse und
- Fig. 3: die Komponenten der Fig. 2 als Sprengbild.

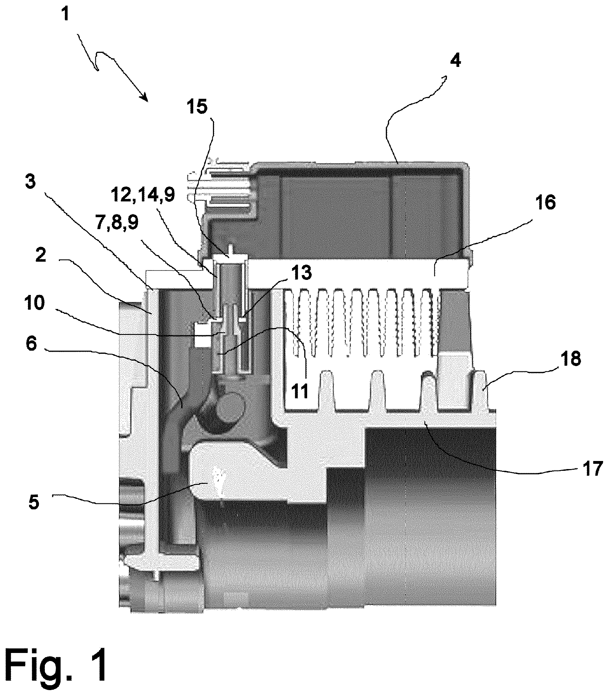

Die Fig. 1 zeigt einen Detailausschnitt einer Antriebsachse 1 als Beispiel einer Motoreinheit im Schnitt mit der erfindungsgemäßen Lösung. Ein Achsengehäuse bzw. Motorgehäuse 2 stößt an einer Trennfuge 3 an ein Leistungselektronikgehäuse 4. In dem Motorgehäuse 2 befindet sich ein elektrischer Antriebsmotor 5, von dem in der Darstellung nur ein Teil der Wicklungen angedeutet ist, der über ein Kabel 6 mit einem Kabelschuh 7 als Anschlusskontakt 8 in Form eines Druckkontakts 9 verbunden ist. Der Kabelschuh 7 ist auf einem Führungsdorn 10 geführt und wird von einer Spiralfeder 11 in der Darstellung nach oben gedrückt bzw. mit einer Federkraft beaufschlagt.

Eine Hülse 12, die als Hohlzylinder aufgebaut ist und koaxial zu dem Führungsdorn 10 ausgerichtet ist, weist an ihrem vorderen Ende eine Schneide 13 auf und wird als Leistungselektronikkontakt 14 in Form eines Druckkontakts 9 auf den Kabelschuh 7 gedrückt, wenn das Leistungselektronikgehäuse 4 an der Trennfuge 3 mit dem Motorgehäuse 2 verbunden bzw. an diesem montiert wird. Durch die Kraft der Spiralfeder 11 wird der flächige Kabelschuh 7 gegen die Schneide 13 der Hülse 12 gedrückt, die einen Linienkontakt ausbildet. Über eine Stromschiene 15 ist der Leistungselektronikkontakt 14 mit einer hier nicht näher dargestellten Leistungselektronik, beispielsweise einem Umrichter, verbunden.

Dadurch erfolgt bei der Montage des Leistungselektronikgehäuses 4 automatisch eine Verbindung der Druckkontakte 9 bzw. des Leistungselektronikkontakts 14 mit dem Anschlusskontakt 8, wobei durch die Positionierung der typischerweise für einen Drehstromanschluss erforderlichen drei Verbindungen, bzw. bei einem rechten und linken Fahrmotor sechs Verbindungen, eine Fehlkontaktierung ausgeschlossen ist, wenn das Leistungselektronikgehäuse 4 sich nur auf eine Art und Weise montieren lässt und richtig montiert wird.

Das Leistungselektronikgehäuse 4 weist einen Teilbereich einer als Kühlkörper ausgeformten Oberfläche 16 auf, der eine Fläche 17 des Motorgehäuses 2 mit Kühlrippen 18 gegenübersteht. Zwischen der Oberfläche 16 und der Fläche 17 bildet sich ein Kanal aus, durch den Kühlluft geleitet werden kann, um sowohl eine Leistungselektronik wie auch den elektrischen Antriebsmotor 5 zu kühlen.

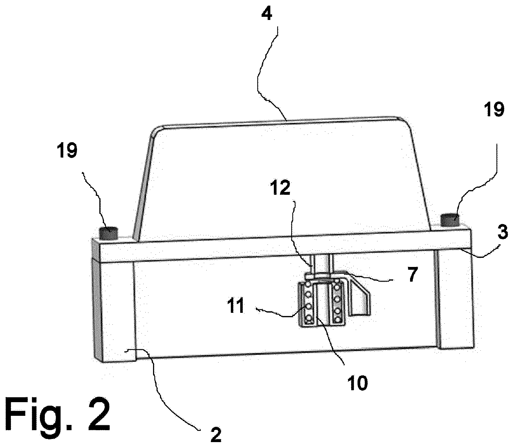

Die Fig. 2 zeigt schematisch eine elektrische Verbindung mit Leistungselektronikgehäuse 4 und Achsengehäuse 2, die an der Trennfuge 3 mit einer Schraubverbindung 19 verbunden sind. Die Hülse 12 bildet mit dem Kabelschuh 7 einen Linienkontakt. Der Kabelschuh 7, geführt von dem Führungsdorn 10, wird durch die Spiralfeder 11 gegen die Hülse 12 gedrückt.

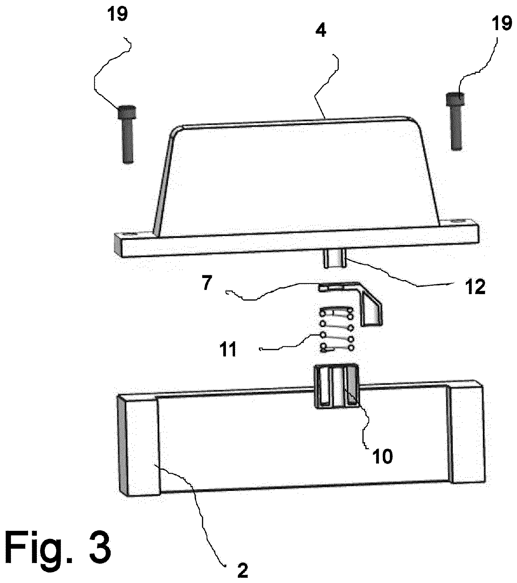

Die Fig. 3 zeigt die Komponenten der Fig. 2 als Sprengbild mit Leistungselektronikgehäuse 4, Motorgehäuse 2, Schraubverbindung 19, Hülse 12, Kabelschuh 7, Führungsdorn 10 und Spiralfeder 11.

## Patentansprüche

1. Elektrische Motoreinheit für eine mobile Arbeitsmaschine mit mindestens einem elektrischen Antriebsmotor (5), einer zur Ansteuerung des Antriebsmotors (5) bestimmten Leistungselektronik, die in einem Leistungselektronikgehäuse (4) angeordnet ist, wobei das Leistungselektronikgehäuse (4) mit einem Motorgehäuse (2) über eine Trennfuge (3) mit einer Schraubverbindung (19) verbunden ist und aufeinander ausgerichtete Druckkontakte (9) von Leistungsanschlüssen der Leistungselektronik und des Antriebsmotors (5) im Verbindungsbereich von Leistungselektronikgehäuse (4) und Motorgehäuse (2) im Inneren beider Gehäuse (4,2) angeordnet sind und zu einer elektrischen Verbindung zusammenwirken, von denen jeweils ein Druckkontakt (9) als Leistungselektronikkontakt (14) der Leistungselektronik und ein mit diesem zusammenwirkender Druckkontakt (9) als Anschlusskontakt (8) dem Antriebsmotors (5) zugeordnet ist, **dadurch gekennzeichnet,**
**dass** mindestens einer der Druckkontakte (9) in Richtung auf seinen mit diesem zusammenwirkenden Druckkontakt (9) mit einer Federkraft durch eine beliebige Form von Federn und elastisch verformbare Materialen beaufschlagt und über eine Mindeststrecke beweglich angeordnet ist sowie ein Druckkontakt (9) ein durch eine scharf zulaufende Kante oder Schneide (13) erzeugter Linienkontakt oder ein durch eine oder mehrere Zuspitzungen des Druckkontakts (9) erreichter Punktkontakt ist und der mit diesem zusammenwirkende Druckkontakt (9) ein Flächenkontakt ist, wodurch eine sichere elektrische Verbindung unabhängig von Unebenheiten, Verschmutzungen oder Oxidation entsteht und Ungenauigkeiten und Toleranzen ausgeglichen werden.

2. Elektrische Motoreinheit nach Anspruch 1,
**dadurch gekennzeichnet,**
**dass** der Flächenkontakt mit einer Federkraft beaufschlagt ist.

3. Elektrische Motoreinheit nach Anspruch 2,
**dadurch gekennzeichnet,**
**dass** der Flächenkontakt aus einem Kabelschuh (7) besteht, der von einem Führungsdorn (10) geführt wird, wobei um den Führungsdorn (10) eine Spiralfeder (11) angeordnet ist, die auf den Kabelschuh (7) drückt.

4. Elektrische Motoreinheit nach einem der Ansprüche 1 bis 3,
**dadurch gekennzeichnet,**
**dass** der Linienkontakt aus einer Hülse (12) besteht, deren Vorderkante die Schneide (13) bildet.

5. Elektrische Motoreinheit nach einem der Ansprüche 1 bis 4,
**dadurch gekennzeichnet,**
**dass** der Punktkontakt aus einer Hülse (12) besteht, deren Vorderkante eine einen oder mehrere punktuelle Vorsprünge bildende Struktur aufweist.

6. Elektrische Motoreinheit nach einem der Ansprüche 3 bis 5,
**dadurch gekennzeichnet,**
**dass** die Hülse (12) koaxial mit dem Führungsdorn (10) ausgerichtet ist.

7. Elektrische Motoreinheit nach einem der Ansprüche 1 bis 6,
**dadurch gekennzeichnet,**
**dass** das Leistungselektronikgehäuse (4) zumindest mit einem Teilbereich einer als Kühlkörper (18) ausgeformten Oberfläche (16) einer Fläche (17) des Motorgehäuses (2) gegenübersteht.

8. Elektrische Motoreinheit nach Anspruch 7,
**dadurch gekennzeichnet,**
**dass** die gegenüberstehende Fläche des Motorgehäuses (2) Kühlrippen (18) aufweist.

9. Elektrische Motoreinheit nach einem der Ansprüche 1 bis 8,
**dadurch gekennzeichnet,**
**dass** der Leistungselektronikkontakt (14) der Linienkontakt oder Punktkontakt ist.

10. Elektrische Motoreinheit nach einem der Ansprüche 1 bis 9,
**dadurch gekennzeichnet,**
**dass** der Anschlusskontakt (8) durch die Federkraft beaufschlagt wird.

11. Elektrische Motoreinheit nach einem der Ansprüche 1 bis 10,
**dadurch gekennzeichnet,**
**dass** die mobile Arbeitsmaschine ein Flurförderzeug ist.

12. Elektrische Motoreinheit nach einem der Ansprüche 1 bis 11,
**dadurch gekennzeichnet,**
**dass** die Motoreinheit eine Antriebsachse der Arbeitsmaschine, oder ein Hydraulikpumpenantrieb, oder ein elektrischer Lenkantrieb ist.

## Claims

1. Electric motor unit for a mobile working machine comprising at least an electric drive motor (5) and a power electronics system which is intended to actuate the drive motor (5) and is arranged in a power electronics housing (4), wherein the power electronics housing (4) is connected to a motor housing (2) by means of a separating joint (3) with a screw connection (19), and pressure contacts (9), which are oriented towards one another, of power connections of the power electronics system and of the drive motor (5) are arranged in the connecting region of the power electronics housing (4) and the motor housing (2) in the interior of the two housings (4, 2) and interact to form an electrical connection, in each case one pressure contact (9) of which pressure contacts, as a power electronics contact (14), is associated with the power electronics system, and one pressure contact (9) of which pressure contacts which interacts with the said power electronics contact, as a connection contact (8), is associated with the drive motor (5),
**characterized**
**in that** at least one of the pressure contacts (9) is acted on in the direction of its pressure contact (9) which interacts therewith by a spring force by any desired form of springs and elastically deformable materials and is arranged such that it can move over a minimum distance, and also one pressure contact (9) is a line contact which is produced by a sharply tapering edge or blade (13) or a point contact which is created by one or more tapered portions of the pressure contact (9), and the pressure contact (9) which interacts therewith is a surface contact, as a result of which secure electrical connection is produced irrespective of unevennesses, soiling or oxidation, and inaccuracies and tolerances are compensated for.

2. Electric motor unit according to Claim 1,
**characterized**
**in that** the surface contact is acted on by a spring force.

3. Electric motor unit according to Claim 2,
**characterized**
**in that** the surface contact comprises a cable shoe (7) which is guided by a guide pin (10), wherein a helical spring (11) which pushes onto the cable shoe (7) is arranged around the guide pin (10).

4. Electric motor unit according to one of Claims 1 to 3,
**characterized**
**in that** the line contact comprises a sleeve (12), the front edge of which sleeve forms the blade (13).

5. Electric motor unit according to one of Claims 1 to 4,
**characterized**
**in that** the point contact comprises a sleeve (12), the front edge of which sleeve has a structure which forms one or more point-like projections.

6. Electric motor unit according to one of Claims 3 to 5,
**characterized**
**in that** the sleeve (12) is oriented coaxially with the guide pin (10).

7. Electric motor unit according to one of Claims 1 to 6,
**characterized**
**in that** the power electronics housing (4), at least by way of a subregion of a surface (16) which is formed as a heat sink (18), is situated opposite a face (17) of the motor housing (2).

8. Electric motor unit according to Claim 7,
**characterized**
**in that** the opposite face of the motor housing (2) has cooling fins (18).

9. Electric motor unit according to one of Claims 1 to 8,
**characterized**
**in that** the power electronics contact (14) is the line contact or point contact.

10. Electric motor unit according to one of Claims 1 to 9,
**characterized**
**in that** the connection contact (8) is acted on by the spring force.

11. Electric motor unit according to one of Claims 1 to 10,
**characterized**
**in that** the mobile working machine is an industrial truck.

12. Electric motor unit according to one of Claims 1 to 11,
**characterized**
**in that** the motor unit is a drive axle of the working machine, or a hydraulic pump drive, or an electric steering drive.

## Revendications

1. Unité de moteur électrique pour un engin de travail mobile, comprenant au moins un moteur d'entraînement électrique (5), une électronique de puissance déterminée prévue pour commander le moteur d'entraînement (5), qui est disposée dans un boîtier de l'électronique de puissance (4), le boîtier de l'électronique de puissance (4) étant connecté à un boîtier de moteur (2) par le biais d'un joint de séparation (3) par une connexion vissée (19) et des contacts de pression (9) alignés l'un sur l'autre de raccords de puissance de l'électronique de puissance et du moteur d'entraînement (5) étant disposés dans la région de connexion du boîtier de l'électronique de puissance (4) et du boîtier de moteur (2) à l'intérieur des deux boîtiers (4, 2) et coopérant pour établir une connexion électrique, dont à chaque fois un contact de pression (9) en tant que contact de l'électronique de puissance (14) est associé à l'électronique de puissance et un contact de pression (9) coopérant avec celui-ci en tant que contact de raccordement (8) est associé au moteur d'entraînement (5),
**caractérisée en ce**
**qu'**au moins l'un des contacts de pression (9) est sollicité, dans la direction de son contact de pression (9) coopérant avec celui-ci, par une force de ressort produite par une forme quelconque de ressorts et de matériaux déformables élastiquement et est disposé de manière déplaçable sur une distance minimale et un contact de pression (9) est un contact linéaire produit par une arête ou un tranchant pointu (13) ou un contact ponctuel obtenu par une ou plusieurs pointes du contact de pression (9) et le contact de pression (9) coopérant avec celui-ci est un contact plan, de sorte qu'une connexion électrique sûre soit établie indépendamment de défauts d'uniformité, de salissures ou d'oxydation, et que des imprécisions et tolérances puissent être compensées.

2. Unité de moteur électrique selon la revendication 1,
**caractérisée en ce que**
le contact plan est sollicité par une force de ressort.

3. Unité de moteur électrique selon la revendication 2,
**caractérisée en ce que**
le contact plan est constitué d'une cosse de câble (7) qui est guidée depuis un mandrin de guidage (10), un ressort spiral (11) étant disposé autour du mandrin de guidage (10), lequel presse sur la cosse de câble (7).

4. Unité de moteur électrique selon l'une quelconque des revendications 1 à 3,
**caractérisée en ce que**
le contact linéaire est constitué d'une douille (12), dont l'arête avant forme le tranchant (13).

5. Unité de moteur électrique selon l'une quelconque des revendications 1 à 4,
**caractérisée en ce que**
le contact ponctuel est constitué d'une douille (12) dont l'arête avant présente une structure formant une ou plusieurs saillies ponctuelles.

6. Unité de moteur électrique selon l'une quelconque des revendications 3 à 5,
**caractérisée en ce que**
la douille (12) est orientée coaxialement avec le mandrin de guidage (10).

7. Unité de moteur électrique selon l'une quelconque des revendications 1 à 6,
**caractérisée en ce que**
le boîtier de l'électronique de puissance (4) est opposé à une surface (17) du boîtier de moteur (2) par au moins une région partielle d'une surface (16) formée en tant que corps de refroidissement (18) .

8. Unité de moteur électrique selon la revendication 7,
**caractérisée en ce que**
la surface opposée du boîtier de moteur (2) présente des ailettes de refroidissement (18).

9. Unité de moteur électrique selon l'une quelconque des revendications 1 à 8,
**caractérisée en ce que**
le contact de l'électronique de puissance (14) est le contact linéaire ou le contact ponctuel.

10. Unité de moteur électrique selon l'une quelconque des revendications 1 à 9,
**caractérisée en ce que**
le contact de raccordement (8) est sollicité par la force de ressort.

11. Unité de moteur électrique selon l'une quelconque des revendications 1 à 10,
**caractérisée en ce que**
l'engin de travail mobile est un chariot de manutention.

12. Unité de moteur électrique selon l'une quelconque des revendications 1 à 11,
**caractérisée en ce que**
l'unité de moteur est un essieu moteur de l'engin de travail, ou un entraînement de pompe hydraulique ou un entraînement de direction électrique.
